# EUROPEAN PATENT SPECIFICATION

(11) **EP 4 230 877 B1**
(45) Date of publication and mention of the grant of the patent: **06.05.2026**
(21) Application number: 23157271.0
(22) Date of filing: 17.02.2023
(51) Int. Cl.: F15B 20/00, F01D 17/00, F16K 1/00, G05B 9/00

(54) **SOLENOID VALVE DRIVEN ACTUATOR SYSTEMS**
AKTUATORSYSTEME ANGETRIEBEN VON ELEKTROMAGNETISCHEM VENTIL
SYSTÈMES D'ACTIONNEUR ENTRAÎNÉS PAR VANNE SOLÉNOÏDE

(30) Priority: 18.02.2022 US 202217675591
(43) Date of publication of application: 23.08.2023
(73) Proprietor: Hamilton Sundstrand Corporation, Charlotte, NC 28217-4578 (US)
(72) Inventor: O'RORKE, Morgan, West Hartford, CT, 06119 (US); DOERNER, Steve, Enfield, CT, 06082 (US); SUSCA, Ryan, Windsor, 06095 (US)
(74) Representative: Dehns

(56) References cited:
- EP-A1- 3 447 315
- WO-A1-2020/016697
- US-A1- 2017 051 768

## Description

### BACKGROUND OF THE INVENTION

### 1. Field of the Invention

The present invention relates to actuator systems and more particularly to solenoid driven actuator systems.

### 2. Description of Related Art

In many turbine engines, effector actuation systems (vanes angle, nozzle area, etc) are usually modulated, but sometimes a two-position system may be advantageous. In modern turbine engines, weight and space are more critical than previous engines because of the increased externals content added to improve engine efficiency. A traditional modulating actuator system usually has two Electro-Hydraulic Servo Valves (EHSVs) and a solenoid driven transfer valve, which tend to be heavy. Actuator systems are disclosed in US 2017/051768 A1, EP 3 447 315 A1 and WO 2020/016697 A1.

The conventional techniques have been considered satisfactory for their intended purpose. However, there is a need for improved actuator systems. This invention provides a solution for this need.

### SUMMARY OF THE INVENTION

A solenoid valve driven actuator system is provided as defined by claim 1.

The transfer solenoid valve can be in fluid communication with the pressure outlet of the first solenoid valve and the pressure outlet of the second solenoid valve. A first pressure inlet of the transfer solenoid valve can be in fluid communication with the pressure outlet of the first solenoid valve. A second pressure inlet of the transfer solenoid valve can be in fluid communication with the pressure outlet of the second solenoid valve.

In some embodiments, depending on safety requirements of the component/program, first and second solenoid valves are configured and adapted to be operated on a single common channel. The first and second solenoid valves can be configured and adapted to be operated on separate channels. The transfer solenoid valve can be configured and adapted to operate on a transfer solenoid valve channel separate from channels controlling the first and second solenoid valves.

In accordance with another aspect, a method for controlling the solenoid valve driven actuator system is provided as defined by claim 8.

In some embodiments, the method can include controlling actuator valve with an output of the transfer solenoid valve by exposing an actuator control cavity of the actuator valve to the high pressure source. The method can include controlling the actuator valve with an output of the transfer solenoid valve by exposing an actuator control cavity of the actuator valve to the low-pressure source.

These and other features of the systems and methods of the subject invention will become more readily apparent to those skilled in the art from the following detailed description of the preferred embodiments taken in conjunction with the drawings.

### BRIEF DESCRIPTION OF THE DRAWINGS

So that those skilled in the art to which the subject invention appertains will readily understand how to make and use the devices and methods of the subject invention without undue experimentation, preferred embodiments thereof will be described in detail herein below with reference to certain figures, wherein:
Fig. 1 is a schematic depiction of a solenoid valve driven actuator system constructed in accordance with an embodiment of the present invention, showing the first solenoid valve in control;
Fig. 2 is a schematic depiction of the system of Fig. 1, showing the second solenoid valve in control; and
Fig. 3 is a schematic depiction of a solenoid valve driven actuator system constructed in accordance with another embodiment of the present invention, showing the first and second solenoid valves driven off the same channel.

### DETAILED DESCRIPTION OF THE PREFERRED EMBODIMENTS

Reference will now be made to the drawings wherein like reference numerals identify similar structural features or aspects of the subject invention.

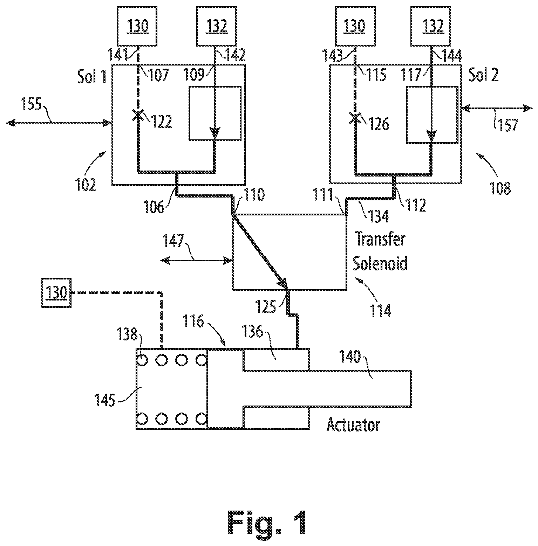

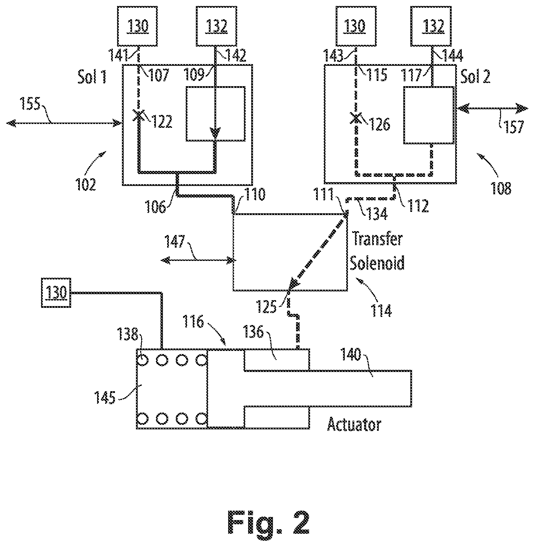

For purposes of explanation and illustration, and not limitation, a schematic view of an exemplary embodiment of the solenoid valve driven actuator system in accordance with the invention is shown in Fig. 1 and is designated generally by reference character 100. Other embodiments of the solenoid valve driven actuator systems in accordance with the invention, or aspects thereof, are provided in Figs. 2-3 as will be described. The systems and methods described herein can be used to provide a two-position actuator that is lighter weight and smaller in size than traditional modulating actuator systems.

As shown in Fig. 1, a solenoid valve driven actuator system 100 is a dual-redundant actuator system 100 that includes a first solenoid valve 102 (Sol 1) and a second solenoid valve 108 (Sol 2). The system 100 includes a transfer solenoid valve 114 operatively coupled to the first and second solenoid valves 102 and 108, respectively. System 100 is arranged such that either the first solenoid valve 102 or the second solenoid valve 108 can control the output to a transfer solenoid valve 114. The first solenoid valve 102 includes a first pressure input 107 and a second pressure input 109 and a pressure outlet 106 downstream from pressure inputs 107 and 109. The second solenoid valve 108 includes a first pressure input 115 and a second pressure input 117 and a second pressure outlet 112 downstream from first and second pressure inputs 115 and 117, respectively. The first pressure input 107 of the first solenoid valve 102 is in fluid communication with a low-pressure source 130.

With continued reference to Fig. 1, the first pressure input 115 of the second solenoid valve 108 is in fluid communication with a low-pressure source 130. The second pressure input 117 of the second solenoid valve 108 is in fluid communication with a high-pressure source 132. The second pressure input 109 of the first solenoid valve 102 is in fluid communication with a high-pressure source 132. The dual-redundant actuator is composed using two 3-way solenoid valves (102 and 108) and a 3-way transfer solenoid valve 114 to give control to either first or second solenoid valve 102 and 108.

With continued reference to Fig. 1, the first and second solenoid valves 102 and 108, respectively, are configured and adapted to be operated on separate channels 155 and 157, respectively. The channels can be operatively coupled to at least one FADEC (Full Authority Digital Engine Control) to receive commands therefrom. The transfer solenoid valve 114 is configured and adapted to operate on a transfer solenoid valve channel 147 separate from channels 155 and 157 controlling the first and second solenoid valves 102 and 108. As such, all three solenoid valves (first 102, second 108 and transfer 114) are controlled by independent channels (first channel 155, second channel 157 and transfer channel 147, respectively). Channels 155, 157 and 147 are schematically depicted as double-headed arrows. The discrete nature of channels 155 and 157, and transfer channel 147, provides redundant control in case of controller channel failure of a solenoid valve. An actuator valve 116 is operatively coupled to a pressure outlet 125 of the transfer solenoid valve 114. Actuator valve 116 includes a spring cavity 145 that is in fluid communication with low-pressure source 130, which can be the same as or different from the low pressure sources 130 coupled to the first and second solenoid valves 102 and 108. The first solenoid valve 102 includes a low-pressure conduit 141, shown schematically with broken lines to indicate low-pressure. The second solenoid valve 108 includes a low-pressure conduit 143. The low-pressure conduit 143 includes an orifice 126. Channels 155, 157 and 147 can be made from a variety of data transmission devices, wireless, wired, or otherwise.

In Fig. 1, the transfer solenoid valve 114 is in fluid communication with the pressure outlet 106 of the first solenoid valve 102. A first pressure inlet 110 of the transfer solenoid valve 114 is in fluid communication with the pressure outlet 106 of the first solenoid valve 102. A second pressure inlet 111 of the transfer solenoid valve 114 is in fluid communication with the pressure outlet 112 of the second solenoid valve 108. The first solenoid valve 102 includes a high-pressure conduit 142, shown in solid lines to indicate high-pressure. The second solenoid valve 108 includes a high-pressure conduit 144. The low-pressure conduit 141 of the first solenoid valve 102 includes an orifice 122 and the low-pressure conduit 143 of the second solenoid valve 108 includes an orifice 126. The high pressure from high-pressure conduit 142 goes into a portion of low-pressure conduit 141 downstream from the orifice 122, which is shown in a solid line to schematically indicate high-pressure relative to the low-pressure upstream from orifice 122. The high pressure from high-pressure conduit 144 goes into a portion of low-pressure conduit 143 downstream from the orifice 126, which is shown in a solid line to schematically indicate high-pressure relative to the low-pressure upstream from orifice 126.

As shown in Fig. 1, both the first and second solenoid valves 102 and 108, respectively, are shown switched to high-pressure, and the first solenoid valve 102 is shown in control. The first and second pressure inlets 110 and 111, respectively, of the transfer solenoid valve 114 direct the output from the first solenoid valve 102 to actuator valve 116 (shown retracting actuator). Those skilled in the art will readily appreciate that in some embodiments, the actuator valve 116 may be arranged differently (e.g., spring 138 may positioned within the actuator control cavity 136) or may be a two-position valve.

With reference now to Fig. 2, the first solenoid valve 102 is switched to high-pressure, the second solenoid valve 108 is switched to low-pressure, and second solenoid valve 108 is shown in control. The low-pressure conduit 141 of the first solenoid valve 102 includes an orifice 122. The high pressure from high-pressure conduit 142 goes into a portion of low-pressure conduit 141 downstream from the orifice 122, which is shown in a solid line to schematically indicate high-pressure relative to the low-pressure upstream from orifice 122. Fig. 2 is the same as Fig. 1 except that transfer solenoid valve 114 directs the low-pressure output from the second solenoid valve 108 to actuator valve 116 (the second solenoid valve is shown extending actuator body 140) instead of from the first solenoid valve 102 to the actuator valve 116. The pressure in actuator control cavity 136 controls whether spring 138 is compressed or released by controlling the axial position of an actuator body 140. The pressure in actuator control cavity 136 controls whether spring 138 is compressed or released by controlling the axial position of an actuator body 140.

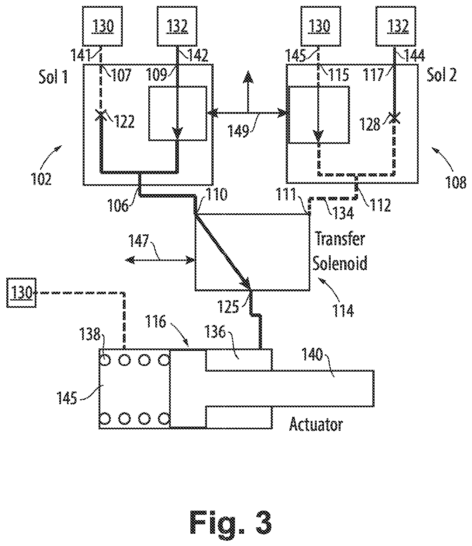

With reference now to Fig. 3, system 100 of Fig. 3 is the same as system 100 in Figs. 1 and 2, except that the first and second solenoid valves 102 and 108 are shown as being operated on a common channel 149. In this way, first and second solenoid valves 102 and 108 are controlled with a single FADEC channel, and the transfer solenoid valve 114 is controlled with its own transfer channel 147. The channels, whether a single channel or two independent channels, can be operatively coupled to at least one FADEC for receiving controls therefrom. As shown in Fig. 3, if channel 149 fails, then transfer channel 147 still communicates with transfer solenoid valve 114 to provide the control. This provides redundant control in the event of controller channel failure.

As shown in Fig. 3, the first solenoid valve 102 is shown switched to high-pressure and the second solenoid valve 108 is shown switched to low-pressure. The first solenoid valve 102 includes a high-pressure conduit 142, shown in solid lines to indicate high-pressure. The second solenoid valve 108 includes a high-pressure conduit 144. The low-pressure conduit 141 of the first solenoid valve 102 includes an orifice 122 and the high-pressure conduit 144 of the second solenoid valve 108 includes an orifice 128. The high pressure from high-pressure conduit 142 goes into a portion of low-pressure conduit 141 downstream from the orifice 122, which is shown in a solid line to schematically indicate high-pressure relative to the low-pressure upstream from orifice 122.

As solenoid valves 102 and 108 are smaller and lighter than EHSVs system 100 provides reduced weight and reduced size envelope as compared with traditional EHSVs. Moreover, if the effector system that the actuator body 140 controls does not have its own means of tracking performance (position sensor, pressure sensor, temp sensor, etc.) embodiments of system 100 can use proximity probes (which have good resolution to determine position in a non-modulated actuator) to determine the left or right position of the actuator body 140. Proximity probes are magnetic sensors that can be installed in the actuator valve 116 to determine position of actuator body 140 (e.g., is the actuator body in the left or right position). Proximity probes are lighter than a linear variable differential transformer (LVDT), which would typically be used to detect the position of the actuator in an EHSV system. The ability to use these proximity probes results in further potential weight and size reduction as compared with traditional EHSV systems. Additionally, because solenoid valves 102 and 108 have little to no internal leakage, system 100 also provides for improved fuel system efficiency and reliability as compared with EHSVs. The simplified control nature of solenoid valves, e.g., the simple I/O control structure, provides easier control as compared with EHSVs. As such, in situations where a non-modulated effector is appropriate, system 100 offers considerable benefits over traditional EHSVs.

A method for controlling the actuator valve 116, with dual redundant solenoid valves, the of first and second solenoid valves 102 and 108, includes providing a control signal to at least one of the first solenoid valve or the second solenoid valve to prompt an output from at least one of the first solenoid valve or the second solenoid valve. The method includes receiving the output in the transfer solenoid valve 114, and providing a transfer control signal to the transfer solenoid valve to prompt the transfer solenoid valve to provide a control pressure from the output to the actuator valve via the high-pressure side, e.g. inlet 110, and/or the low pressure side, e.g. inlet 111.

The method includes providing the control pressure from the transfer solenoid valve to the actuator valve. The method includes controlling the actuator valve with an output of the transfer solenoid valve by exposing an actuator control cavity, e.g. actuator control cavity 136, of the actuator valve to the high pressure source. In some embodiments, the method includes controlling the actuator valve with an output of the transfer solenoid valve by exposing the actuator cavity of the actuator valve to the low pressure source. The method includes communicating commands to the transfer solenoid valve through a transfer channel, e.g. channel 147. The method includes communicating commands to the first solenoid valve through a first channel, e.g. channel 155, and communicating commands to the second solenoid valve through a second channel, e.g. channel 157, where the first and second channels are separate from one another. The transfer channel is separate from both first and second channels. In some embodiments, the method can include communicating commands to the first and second solenoid valves through a common channel, e.g. common channel 149. In this instance, transfer channel is still separate from common channel 149.

The methods and systems of the present invention, as described above and shown in the drawings, provide for solenoid valve driven actuator system, with superior properties including reduced weight and size, and increased reliability and efficiency. The systems and methods of the present invention can apply to a variety of actuators, or the like. While the apparatus and methods of the subject invention have been shown and described with reference to preferred embodiments, those skilled in the art will readily appreciate that changes and/or modifications may be made thereto without departing from the scope of the invention as defined by the claims.

## Claims

1. A solenoid valve driven actuator system, the system comprising:
a first solenoid valve (102) having at least one pressure input (107) and a pressure outlet (106) downstream from the at least one pressure input;
a second solenoid valve (108) having at least one pressure input (115) and a pressure outlet (112) downstream from the at least one pressure input;
a transfer solenoid valve (114) operatively coupled to the first and second solenoid valves; and
an actuator valve (116) operatively coupled to a pressure outlet (125) of the transfer solenoid; wherein
the at least one pressure input of the first solenoid valve includes a first pressure input (107) and a second pressure input (109);
the first solenoid valve (102) further comprises a high-pressure conduit (142) connected to its second pressure input (109) and a low-pressure conduit (141) connected to its first pressure input (107);
wherein the at least one pressure input of the second solenoid valve includes a first pressure input (115) and a second pressure input (117); and
the second solenoid valve (108) further comprises a high-pressure conduit (144) connected to its second pressure input (117) and a low-pressure conduit (143) connected to its first pressure input (115);
**characterized in that** the low-pressure conduit (141) of the first solenoid (102) includes an orifice (122);
wherein the high pressure from the high-pressure conduit (142) of the first solenoid (102) goes into a portion of the low-pressure conduit (141) of the first solenoid downstream from the orifice (122); and
wherein the low-pressure conduit (143) of the second solenoid (108) includes an orifice (126);
wherein the high pressure from the high-pressure conduit (144) of the second solenoid valve (108) goes into a portion of the low-pressure conduit (143) of the second solenoid valve (108) downstream from the orifice (126).

2. The solenoid valve driven actuator system of any preceding claim, wherein the transfer solenoid valve is in fluid communication with the pressure outlet of the first solenoid valve and the pressure outlet of the second solenoid valve.

3. The solenoid valve driven actuator system of any preceding claim, wherein a first pressure inlet (110) of the transfer solenoid valve is in fluid communication with the pressure outlet of the first solenoid valve.

4. The solenoid valve driven actuator system of claim 3, wherein a second pressure inlet (111) of the transfer solenoid valve is in fluid communication with the pressure outlet of the second solenoid valve.

5. The solenoid valve driven actuator system of any preceding claim, wherein the first and second solenoid valves are configured and adapted to be operated on a common channel (149).

6. The solenoid valve driven actuator system of any of claims 1 to 4, wherein the first and second solenoid valves are configured and adapted to be operated on separate channels (155,157).

7. The solenoid valve driven actuator system of any preceding claim, wherein the transfer solenoid valve is configured and adapted to operated on a transfer solenoid valve channel (147) separate from channels controlling the first and second solenoid valves.

8. A method for controlling the solenoid valve driven actuator system of any preceding claim, the method comprising:
providing a control signal to at least one of the first solenoid valve (102) or the second solenoid valve (108) to prompt an output from at least one of the first solenoid valve or the second solenoid valve;
receiving the output in the transfer solenoid valve (114);
providing a transfer control signal to the transfer solenoid valve to prompt the transfer solenoid valve to provide a control pressure from the output to the actuator valve (116) via at least one of the high-pressure side or the low pressure side; and
providing the control pressure from the transfer solenoid valve to the actuator valve.

9. The method as recited in claim 8, controlling the actuator valve with an output of the transfer solenoid valve by exposing an actuator control cavity of the actuator valve to a high pressure source.

10. The method as recited in claim 8, controlling the actuator valve with an output of the transfer solenoid valve by exposing an actuator control cavity of the actuator valve to a low pressure source.

## Patentansprüche

1. Aktuatorsystem, angetrieben von einem elektromagnetischen Ventil, wobei das System Folgendes umfasst:
ein erstes elektromagnetisches Ventil (102), das mindestens einen Druckeingang (107) und einen Druckauslass (106) stromabwärts von dem mindestens einen Druckeingang aufweist;
ein zweites elektromagnetisches Ventil (108), das mindestens einen Druckeingang (115) und einen Druckauslass (112) stromabwärts von dem mindestens einen Druckeingang aufweist;
ein elektromagnetisches Transferventil (114), das an das erste und zweite elektromagnetische Ventil wirkgekoppelt ist; und
ein Aktuatorventil (116), das an den Druckauslass (125) des elektromagnetischen Transferventils wirkgekoppelt ist; wobei
der mindestens eine Druckeingang des ersten elektromagnetischen Ventils einen ersten Druckeingang (107) und einen zweiten Druckeingang (109) beinhaltet;
das erste elektromagnetische Ventil (102) ferner eine mit dessen zweitem Druckeingang (109) verbundene Hochdruckleitung (142) und eine mit dessen erstem Druckeingang (107) verbundene Niederdruckleitung (141) umfasst;
wobei der mindestens eine Druckeingang des zweiten elektromagnetischen Ventils einen ersten Druckeingang (115) und einen zweiten Druckeingang (117) beinhaltet; und
das zweite elektromagnetische Ventil (108) ferner eine mit dessen zweitem Druckeingang (117) verbundene Hochdruckleitung (144) und eine mit dessen erstem Druckeingang (115) verbundene Niederdruckleitung (143) umfasst;
**dadurch gekennzeichnet, dass** die Niederdruckleitung (141) des ersten elektromagnetischen Ventils (102) eine Öffnung (122) beinhaltet;
wobei der hohe Druck aus der Hochdruckleitung (142) des ersten elektromagnetischen Ventils (102) in einen Abschnitt der Niederdruckleitung (141) des ersten elektromagnetischen Ventils stromabwärts der Öffnung (122) eintritt; und
wobei die Niederdruckleitung (143) des zweiten elektromagnetischen Ventils (108) eine Öffnung (126) aufweist;
wobei der hohe Druck aus der Hochdruckleitung (144) des zweiten elektromagnetischen Ventils (108) in einen Abschnitt der Niederdruckleitung (143) des zweiten elektromagnetischen Ventils (108) stromabwärts der Öffnung (126) eintritt.

2. Aktuatorsystem, angetrieben von einem elektromagnetischen Ventil, nach einem der vorhergehenden Ansprüche, wobei das elektromagnetische Transferventil in Fluidverbindung mit dem Druckauslass des ersten elektromagnetischen Ventils und dem Druckauslass des zweiten elektromagnetischen Ventils steht.

3. Aktuatorsystem, angetrieben von einem elektromagnetischen Ventil, nach einem der vorhergehenden Ansprüche, wobei ein erster Druckeinlass (110) des elektromagnetischen Transferventils in Fluidverbindung mit dem Druckauslass des ersten elektromagnetischen Ventils steht.

4. Aktuatorsystem, angetrieben von einem elektromagnetischen Ventil, nach Anspruch 3, wobei ein zweiter Druckeinlass (111) des elektromagnetischen Transferventils in Fluidverbindung mit dem Druckauslass des zweiten elektromagnetischen Ventils steht.

5. Aktuatorsystem, angetrieben von einem elektromagnetischen Ventil, nach einem der vorhergehenden Ansprüche, wobei das erste und zweite elektromagnetische Ventil dazu konfiguriert und angepasst sind, auf einem gemeinsamen Kanal (149) betrieben zu werden.

6. Aktuatorsystem, angetrieben von einem elektromagnetischen Ventil, nach einem der Ansprüche 1 bis 4, wobei das erste und zweite elektromagnetische Ventil dazu konfiguriert und angepasst sind, auf getrennten Kanälen (155, 157) betrieben zu werden.

7. Aktuatorsystem, angetrieben von einem elektromagnetischen Ventil, nach einem der vorhergehenden Ansprüche, wobei das elektromagnetische Transferventil dazu konfiguriert und angepasst ist, auf einem Kanal des elektromagnetischen Transferventils (147) getrennt von das erste und zweite elektromagnetische Ventil steuernden Kanälen betrieben zu werden.

8. Verfahren zum Steuern des Aktuatorsystems, angetrieben von einem elektromagnetischen Ventil, nach einem der vorhergehenden Ansprüche, wobei das Verfahren Folgendes umfasst:
Bereitstellen eines Steuersignals an mindestens einem von dem ersten elektromagnetischen Ventil (102) oder dem zweiten elektromagnetischen Ventil (108), um eine Ausgabe von mindestens einem von dem ersten elektromagnetischen Ventil oder dem zweiten elektromagnetischen Ventil zu veranlassen;
Empfangen der Ausgabe in dem elektromagnetischen Transferventil (114);
Bereitstellen eines Transfersteuersignals an dem elektromagnetischen Transferventil, um das elektromagnetische Transferventil zu veranlassen, einen Steuerdruck von der Ausgabe an dem Aktuatorventil (116) über mindestens eine von der Hochdruckseite oder der Niederdruckseite bereitzustellen; und
Bereitstellen des Steuerdrucks von dem elektromagnetischen Transferventil an dem Aktuatorventil.

9. Verfahren nach Anspruch 8, Steuern des Aktuatorventils mit einer Ausgabe des elektromagnetischen Transferventils durch Aussetzen eines Aktuatorsteuerhohlraums des Aktuatorventils an eine Hochdruckquelle.

10. Verfahren nach Anspruch 8, Steuern des Aktuatorventils mit einer Ausgabe des elektromagnetischen Transferventils durch Aussetzen eines Aktuatorsteuerhohlraums des Aktuatorventils an eine Niederdruckquelle.

## Revendications

1. Système d'actionneur entraîné par vanne solénoïde, le système comprenant :
une première vanne (102) solénoïde ayant au moins une entrée (107) de pression et une sortie (106) de pression en aval de l'au moins une entrée de pression ;
une seconde vanne (108) solénoïde ayant au moins une entrée (115) de pression et une sortie (112) de pression en aval de l'au moins une entrée de pression ;
une vanne (114) solénoïde de transfert couplée fonctionnellement aux première et seconde vannes solénoïdes ; et
une vanne (116) d'actionneur couplée fonctionnellement à une sortie (125) de pression du solénoïde de transfert ; dans lequel l'au moins une entrée de pression de la première vanne solénoïde comporte une première entrée (107) de pression et une seconde entrée (109) de pression ;
la première vanne (102) solénoïde comprend en outre un conduit (142) haute pression relié à sa seconde entrée (109) de pression et un conduit (141) basse pression relié à sa première entrée (107) de pression ;
dans lequel l'au moins une entrée de pression de la seconde vanne solénoïde comporte une première entrée (115) de pression et une seconde entrée (117) de pression ; et
la seconde vanne (108) solénoïde comprend en outre un conduit (144) haute pression relié à sa seconde entrée (117) de pression et un conduit (143) basse pression relié à sa première entrée (115) de pression ;
**caractérisé en ce que** le conduit (141) basse pression du premier solénoïde (102) comporte un orifice (122) ;
dans lequel la haute pression provenant du conduit (142) haute pression du premier solénoïde (102) pénètre dans une partie du conduit (141) basse pression du premier solénoïde en aval de l'orifice (122) ; et
dans lequel le conduit (143) basse pression du second solénoïde (108) comporte un orifice (126) ;
dans lequel la haute pression provenant du conduit (144) haute pression de la seconde vanne (108) solénoïde pénètre dans une partie du conduit (143) basse pression de la seconde vanne (108) solénoïde en aval de l'orifice (126).

2. Système d'actionneur entraîné par vanne solénoïde selon une quelconque revendication précédente, dans lequel la vanne solénoïde de transfert est en communication fluidique avec la sortie de pression de la première vanne solénoïde et la sortie de pression de la seconde vanne solénoïde.

3. Système d'actionneur entraîné par vanne solénoïde selon une quelconque revendication précédente, dans lequel une première entrée (110) de pression de la vanne solénoïde de transfert est en communication fluidique avec la sortie de pression de la première vanne solénoïde de transfert.

4. Système d'actionneur entraîne par vanne solénoïde selon la revendication 3, dans lequel une seconde entrée (111) de pression de la vanne solénoïde de transfert est en communication fluidique avec la sortie de pression de la seconde vanne solénoïde.

5. Système d'actionneur entraîné par vanne solénoïde selon une quelconque revendication précédente, dans lequel les première et seconde vannes solénoïdes sont configurées et conçues pour fonctionner sur un canal (149) commun.

6. Système d'actionneur entraîné par vanne solénoïde selon l'une quelconque des revendications 1 à 4, dans lequel les première et seconde vannes solénoïdes sont configurés et conçues pour fonctionner sur des canaux (155, 157) séparés.

7. Système d'actionneur entraîné par vanne solénoïde selon une quelconque revendication précédente, dans lequel la vanne solénoïde de transfert est configurée et conçue pour fonctionner sur un canal (147) de vanne solénoïde de transfert séparé des canaux commandés par les première et seconde vannes solénoïdes.

8. Procédé de commande du système d'actionneur entraîné par vanne solénoïde selon une quelconque revendication précédente, le procédé comprenant :
la fourniture d'un signal de commande à au moins l'une de la première vanne (102) solénoïde ou de la seconde vanne (108) solénoïde pour inciter une sortie d'au moins l'une de la première vanne solénoïde ou de la seconde vanne solénoïde ;
la réception de la sortie dans la vanne (114) solénoïde de transfert ;
la fourniture d'un signal de commande de transfert à la vanne solénoïde de transfert pour inciter la vanne solénoïde de transfert à fournir une pression de commande de la sortie à la vanne (116) d'actionneur via au moins l'un du côté haute pression ou du côté basse pression ; et
la fourniture de la pression de commande de la vanne solénoïde de transfert à la vanne d'actionneur.

9. Procédé selon la revendication 8, commandant la vanne d'actionneur avec une sortie de la vanne solénoïde de transfert en exposant une cavité de commande d'actionneur de la vanne d'actionneur à une source haute pression.

10. Procédé selon la revendication 8, commandant la vanne d'actionneur avec une sortie de la vanne solénoïde de transfert en exposant une cavité de commande d'actionneur de la vanne d'actionneur à une source basse pression.
